Europäisches Patentamt

European Patent Office

Office européen des brevets

(19)

(11) Veröffentlichungsnummer: **0 213 110**
**B1**

(12) # EUROPÄISCHE PATENTSCHRIFT

(45) Veröffentlichungstag der Patentschrift:
04.10.89

(51) Int. Cl.⁴: **F 16 F 1/36,** B 60 G 11/10

(21) Anmeldenummer: **86890201.6**

(22) Anmeldetag: **07.07.86**

(54) **Federung für Fahrzeuge.**

(30) Priorität: **03.08.85 DE 3527899**

(43) Veröffentlichungstag der Anmeldung:
**04.03.87 Patentblatt 87/10**

(45) Bekanntmachung des Hinweises auf die Patenterteilung:
**04.10.89 Patentblatt 89/40**

(84) Benannte Vertragsstaaten:
**AT CH DE FR GB IT LI NL SE**

(56) Entgegenhaltungen:
**EP-A-0 092 399**
**DE-A-3 116 173**
**US-A-3 749 389**

(73) Patentinhaber: **BÖHLER AKTIENGESELLSCHAFT, Hansaallee 321, D-4000 Düsseldorf 11 (DE)**

(72) Erfinder: **Puck, Alfred, Prof. Dr.- Ing., Am Ahlberg 33, D-3524 Immenhausen- Mariendorf (DE)**

LIBER, STOCKHOLM 1989

EP 0 213 110 B1

## Beschreibung

Die Erfindung bezieht sich auf eine Federung von Fahrzeugen mit zumindest einem Federblatt aus glasfaserverstärktem Kunststoff, gemäß den Merkmalen des Oberbegriffes.

Bei Federungen, insbesondere für schwere Kraftfahrzeuge ist es bekannt, Stützfedern vorzusehen, wobei diese Stützfedern bei großer Belastung des Fahrzeuges erst in Wirkung kommen. Aus der DE-A1-3 147 629 wird eine Blattfederbaueinheit für die Abfederung von Kraftfahrzeugen bekannt, wobei eine Blattfeder aus Stahl vorgesehen ist, die über Augen mit dem Fahrzeug und in ihrem Mittenbereich über eine Einspannung mit der Achse verbunden ist. In dieser Einspannung ist weiters eine Stützfeder angeordnet, die an ihren beiden Endbereichen, starre, nicht federnde Auflagen aufweist, welche als Distanzstücke zur Feder dienen. Diese starren Auflagen können ihrerseits noch Spiralfedern tragen. Eine derartige Anordnung soll eine bestimmte Federcharakteristik durch Austauschen der starren nicht federnden Teile auf der Stützfeder möglich machen.

Eine andere Lösung ist nach EP-A-92 399 bekannt, bei der ein Hauptfederblatt vorgesehen ist, das eine Stützfeder enthält, wobei im Zentrum mehrere übereinandergelagerte, mit Flachköpfen versehene Stifte für die Zentrierung anstelle der üblichen Herzbolzen bei Stahlfedern herangezogen werden. Diese Flach- oder Linsenköpfe sollen den Faserverlauf im Federblatt nicht unterbrechen. Nachteilig ist jedoch, daß bei Anordnung dieser Zentrierstifte eine Kerbwirkung nicht zu vermeiden ist. Dies ergibt eine Schwachstelle im Federungssystem und ist für wechselnde Beanspruchungen nicht geeignet.

Die vorliegende Erfindung hat sich zur Aufgabe gesetzt, eine Federung zu schaffen, bei welcher durch eine Stützfederung das Hauptfederblatt bereits in der Anfangsbelastung unterstützt wird, und bei dem eine einfache Einspannung für das Hauptfederblatt vorgesehen sein kann, wobei mit der Einspannung keine Kerbwirkungen auf der Kunststoffeder auftreten. Eine weitere Aufgabe der Federung besteht darin, eine möglichst gewichtsarme und einfach ausgestaltete Feder, insbesondere Einspannung zu schaffen. Erfindungsgemäß wird das Ziel dadurch erreicht, daß das Federblatt innerhalb der Einspannung zwei zueinander weisende Keilflächen aufweist, die einen Winkel zwischen 5° und 30°, insbesondere 10° und 20°, mit der anschließenden zum Federende weisenden Fläche einschließen, die mit einer Keilfläche der Einspannung kooperieren, wobei zwischen der der Keilfläche gegenüberliegenden Anliegefläche der Einspannung und dem Federblatt ein volumenskonstanter gefüllter Kunststoff, z. B. mit Metallpulver gefülltes Epoxidharz, vorzugsweise in situ gefertigter Körper, angeordnet ist.

Eine derartige Federung gestattet eine gewichtsarme Ausbildung der Einspannung bei Federblättern aus faserverstärktem Kunststoff, da die Krafteinleitung vom Federblatt in die Einspannung durch die Stützfedern, welche bereits zu Beginn der Belastung wirksam werden, aufgenommen wird, wobei weiters die flächige Befestigung der Feder mit einem Formschluß den anistropen Eigenschaften einer Kunststoffeder besonders gut Rechnung trägt und das flächige bzw. vollflächige Anliegen der Stützfeder auf das Federblatt ebenfalls eine Einleitung der Kraft über eine größere Fläche erlaubt. Die Stützfederung dient im wesentlichen als Teil der Einspannung, welche elastisch nachgiebig ausgebildet ist.

Ist die Stützfederung mit einer Blattfeder, welche zumindest teilweise starr in der Einspannung unter Formschluß zur Verhinderung einer Relativbewegung in Federlängsrichtung gehalten ist, mit faserverstärktem Kunststoff mit im wesentlichen in und über Stützfeder-Längserstreckung erstreckenden Fasern aufgebaut, so ist einerseits eine Gewichtsersparnis gegeben, wobei andererseits die Federeigenschaften besonders gut angepaßt werden können und eine gegenseitige Beschädigung außerhalb bzw. innerhalb der Einspannung besonders leicht vermeidbar ist.

Ist die Dicke der Stützfeder geringer, insbesondere zwei Drittel bis ein Drittel geringer als die Dicke des Federblattes im Anliegebereich beider aneinander außerhalb der Einspannung, so kann eine sehr gute Krafteinleitung in die Einspannung erreicht werden, wobei gleichzeitig nur ein geringes Volumen erforderlich ist.

Ragt die Stützfeder um die Hälfte bis zum Zweifachen der Dicke des Federblattes im Anliegebereich beider aneinander außerhalb der Einspannung aus der Einspannung, so wird der Materialbeschaffenheit von faserverstärkten Kunststoffedern besonders günstig Rechnung getragen, da einerseits die Federcharakteristik nicht so verändert wird, als ob zwei Federblätter vorliegen würden, und andererseits sich eine Stützung im Mittenbereich ergibt, die neben der federnden Unterstützung auch eine besonders vorteilhafte Einleitung der Kräfte in die Einspannung bewirkt.

Sind als Stützfeder in der Einspannung beidseitig außerhalb des Bereiches der starren Halterung elastisch deformierbare Auf- und/oder Einlagen, z. B. aus elastomerem Material wie Gummi od. dgl., vorgesehen, so können diese elastischen Elemente ebenfalls für eine weiche Einleitung der Kräfte von der Feder in die Halterung Sorge tragen, sodaß einer Zerstörung derselben besonders günstig entgegengewirkt wird. Derartige elastisch deformierbare Auf- und/oder Einlagen können auch zusätzlich zu einer Stützfeder, die als Blattfeder ausgebildet ist, vorgesehen sein.

Beträgt der Bereich der starren Halterung in der Einspannung das Zwei- bis Sechsfache der Federblattdicke im Anliegebereich des Federblattes und der Stützfeder aneinander außerhalb der Einspannung, so ist einerseits eine feste, starre Halterung der Feder auf der Achse erreicht, wobei andererseits die Federungseigenschaften dadurch nur gering beeinträchtigt werden.

In der Halterung können auch mehrere nicht aneinander anliegende Blattfedern, insbesondere mit Stützfedern angeordnet sein, welche beispielsweise als nicht anliegende Stützfeder, also als eigentliche Stützfeder dienen kann.

Im folgenden wird die Erfindung anhand der Zeichnungen näher erläutert.

Es zeigen

Fig. 1    eine Federung mit einer Stützfeder als Blattfeder und

Fig. 2    eine Federung mit elastischer Einlage.

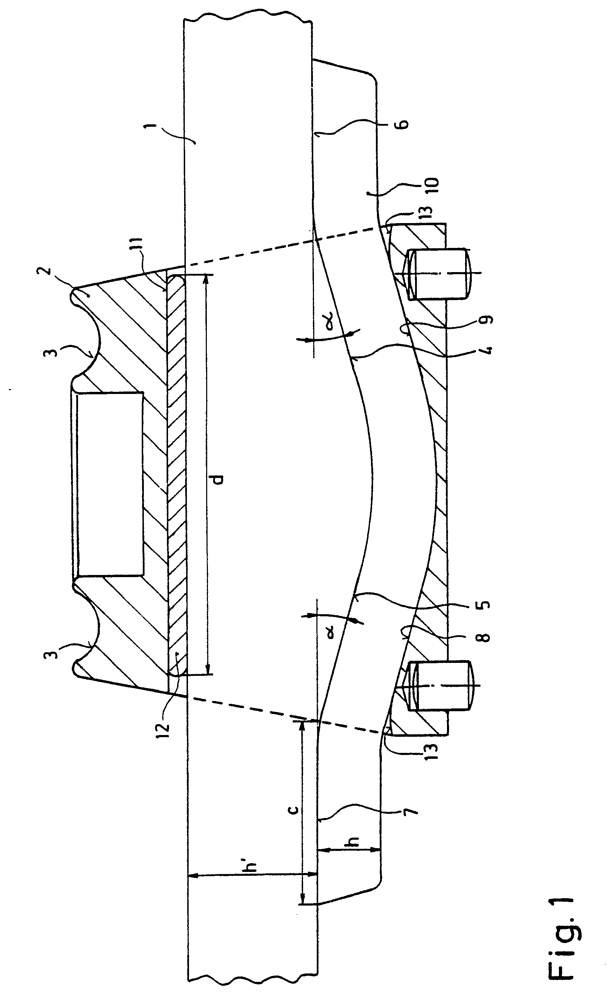

Das in Fig. 1 teilweise dargestellte Federblatt 1 ist aus faserverstärktem Kunststoff mit in und über Federlängserstreckung angeordneten Glasfasern aufgebaut und nur in seinem Mittenbereich und zwar im Bereich der mehrteiligen Einspannung 2 mit Ausnehmungen 3 für Spannbügel dargestellt. Die beiden Enden, welche Federaugen aufweisen, die üblicher Ausgestaltung sein können, wurden der Einfachheit halber nicht dargestellt. Die Feder weist zwei Keilflächen 4 und 5 auf, die mit den anschließenden Flächen 6 und 7 jeweils einen Winkel α von zirka 15° einschließen. Die Einspannung 2 weist zu den Flächen 4 und 5 korrespondierende Keilflächen 8 und 9 auf. Diese Keilflächen 4 und 5 des Federblattes 1 können auch dadurch gebildet werden, daß eine Feder mit gleichbleibendem Querschnitt verwendet wird, welche in ihrem Einspannbereich eine Einbiegung erleidet. In diesem Falle muß die Einspannung sowohl oben als auch unten entsprechende Keilflächen aufweisen, wodurch ein besonders guter Formschluß gegeben ist. Unterhalb des Federblattes 1 ist in der Einspannung eine Stützfeder 10 angeordnet, die ebenfalls aus faserverstärktem Kunststoff aufgebaut ist. Die Dicke h der Stützfeder beträgt die Hälfte der Dicke h' des Federblattes 1 und zwar im Anliegebereich beider aneinander außerhalb der Einspannung. Die Stützfeder liegt in einem Bereich c außerhalb der Einspannung am Federblatt 1 an, wobei dieser Bereich c in etwa der Größe h' entspricht. Zwischen dem Federblatt 1 und der Einspannung 2 befindet sich an der oberen Anliegefläche 11 ein in situ gefertigter Körper 12, welcher aus mit Aluminiumpulver gefülltem Epoxidharz besteht. Der Bereich d der starren Halterung in der Einspannung entspricht in etwa der dreifachen Federblattdicke h' im Anliegebereich der beiden Federn aneinander außerhalb der Einspannung. Durch die aus der Einspannung nur leicht herausragende Stützfeder 10 wird eine sanfte Einleitung der Kräfte, welche auf das Federblatt 1 einwirken, in die Einspannung ermöglicht. Die Einspannung 2 weist weiters Abrundungen 13 auf, sodaß auch Kerbwirkungen an der Stützfeder vermieden werden. Wie aus der Zeichnung klar ersichtlich, sind sowohl die Stützfeder als auch das Federblatt in der Einspannung starr gehalten, sodaß in diesem Bereich durch Bewegung keine Zerstörung eintreten kann, wobei innerhalb des Bereiches c eine beschränkte Beweglichkeit gegeben ist, da dort die Stützfeder gleichzeitig einen die Bewegung hemmenden Widerstand liefert. Um Reibungen in diesem Bereich zwischen den Federn zu verhindern, kann zwischen der Stützfeder und der Blattfeder beispielsweise ein Film aus PTFE eingelegt werden, der einerseits eine starre Einspannung nicht verhindert und anderseits Gleitbewegungen erleichtert und damit einen Wärmeaufbau geringhalten läßt.

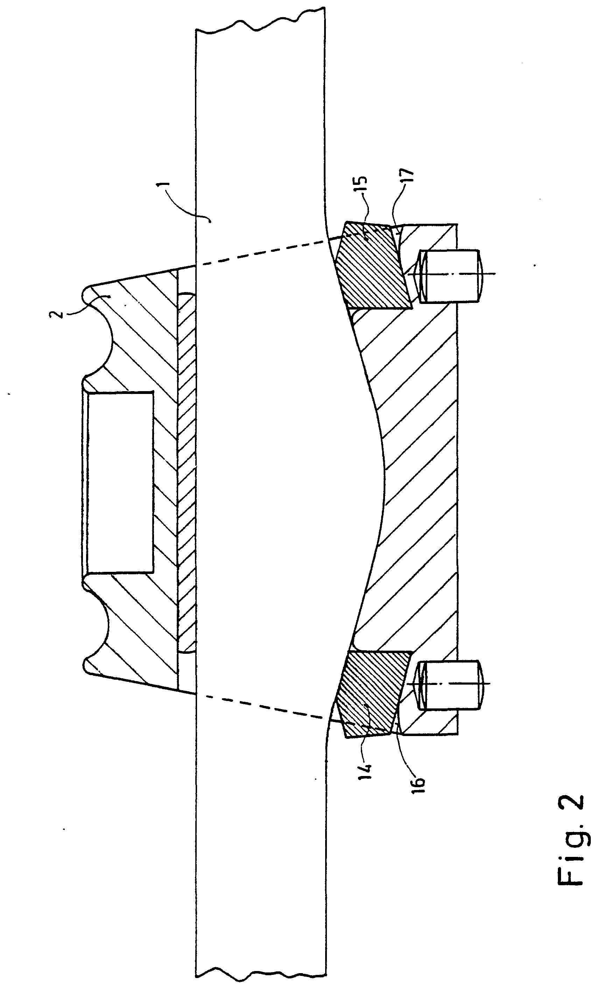

Die in Fig. 2 dargestellte Federung entspricht der Federung gemäß Fig. 1, wobei die Stützfeder durch zwei Gummiauf- und -einlagen 14, 15 gebildet ist, die in entsprechende Ausnehmungen 16, 17 der Einspannung 2 angeordnet beispielsweise anvulkanisiert sind. Wie aus der Zeichnung klar ersichtlich, können auch hier die Kräfte besonders günstig aufgenommen werden.

Unterhalb einer derartigen Federung können andere Stützfedern, welche erst bei Belastung oder bei Vollast in Aktion treten, vorgesehen sein.

## Patentansprüche

1. Federung für Fahrzeuge, insbesondere selbstgetriebene Fahrzeuge mit zumindest einem Federblatt (1), das über eine Einspannung (2) mit einer Achse und gegebenenfalls an zumindest einem Ende über ein Auge od. dgl. mit dem Fahrzeug verbunden ist, wobei die Einspannung (2) mit zumindest einem wesentlichen Anteil der oberen und unteren Flächen, die zur Feder weisen, mittelbar oder unmittelbar anliegt und eine Stützfederung (10, 14, 15) aufweist, das Federblatt (1) mit faserverstärktem Kunststoff mit über die Längserstreckung verlaufenden Fasern mit Formschlußelementen zur Verhinderung einer Relativbewegung in Federlängsrichtung aufgebaut ist, in der Einspannung (2) starr in dieser gehalten ist und die Stützfeder (10, 14, 15) unter Zwischenschaltung einer Gleitschicht flächig an der Feder anliegt, dadurch gekennzeichnet, daß das Federblatt (1) innerhalb der Einspannung (2) zwei zueinander weisende Keilflächen (4, 5) aufweist, die einen Winkel (α) zwischen 5° und 30°, insbesondere 10° und 20°, mit der anschließenden zum Federende weisende Fläche (6, 7) einschließen, die mit einer Keilfläche (8, 9) der Einspannung (2) kooperieren, wobei zwischen der der Keilfläche gegenüberliegenden Anliegefläche (11) der Einspannung (2) und dem Federblatt (1) ein volumenskonstanter gefüllter Kunststoff, z. B. mit Metallpulver gefülltes Epoxidharz, vorzugsweise in situ gefertigter Körper (12), angeordnet ist.

2. Federung nach Anspruch 1, dadurch gekennzeichnet, daß die Stützfederung (10) mit einer Blattfeder, welche zumindest teilweise starr in der Einspannung (2) unter Formschluß zur Verhinderung einer Relativbewegung in Federlängsrichtung gehalten ist, mit faserverstärktem Kunststoff mit im wesentlichen in und über Stützfederlängserstreckung erstreckenden Fasern aufgebaut ist.

3. Federung nach Anspruch 2, dadurch gekennzeichnet, das die Dicke (h) der Stützfeder (10) geringer ist, insbesondere zwei Drittel bis ein Drittel geringer ist, als die Dicke (h') des Federblattes (1) im Anliegebereich (c) beider aneinander außerhalb der Einspannung.

4. Federung nach Anspruch 1, 2 oder 3, dadurch gekennzeichnet, daß die Stützfeder (10) um die Hälfte bis zum Zweifachen der Dicke (h') des Federblattes (1) im Anliegebereich (c) beider aneinander außerhalb der Einspannung aus der Einspannung (2) ragt.

5. Federung nach einem der Ansprüche 1 bis 4, dadurch gekennzeichnet, daß als Stützfeder in der Einspannung (2) beidseitig, außerhalb des Bereiches der starren Halterung elastisch deformierbare Auf- und/oder Einlagen (14, 15) z. B. aus elastomeren Material wie Gummi vorgesehen sind.

6. Federung nach einem der Ansprüche 1 bis 5, dadurch gekennzeichnet, das der Bereich der starren Halterung (d) in der Einspannung (2) der zwei- bis sechsfachen Federblattdicke (h') im Anliegebereich des Federblattes und der Stützfeder aneinander außerhalb der Einspannung, beträgt.

## Claims

1. A suspension for vehicles, in particular self-driven vehicles, having at least one spring plate (1) which is connected to an axle by a clamping device (2) and optionally at least at one end to the vehicle by an eye or the like, the clamping device (2) being in contact, directly or indirectly, on at least a substantial portion of the upper and lower surfaces which face the spring, and having a supporting suspension (10, 14, 15), the spring plate (1) being constructed of fibre-reinforced plastic with fibres which run across the longitudinal extent, and having form-locking elements to prevent a relative movement in the longitudinal direction of the spring, and being held rigidly in the clamping device (2), and the supporting spring (10, 14, 15) being in planar contact with the spring with the interposition of a sliding layer, characterised in that the spring plate (1) has two inclined surfaces (4, 5) inside the clamping device (2) which point towards each other and which, with the adjoining surfaces (6, 7) which face the end of the spring, enclose an angle (α) of between 5° and 30°, in particular 10° and 20°, which inclined surfaces cooperate with an inclined surface (8, 9) of the clamping device (2), a filled plastic which is constant in volume, e.g. an epoxy resin filled with powdered metal, preferably members (12) made in situ, being arranged between the bearing surface (11) of the clamping device (2) which lies opposite the inclined surface and the spring plate (1).

2. A suspension according to Claim 1, characterised in that the supporting suspension (10) with a spring plate which is held rigidly, at least in part, in the clamping device (2) in a form-lock to prevent a relative movement in the longitudinal direction of the spring is constructed with fibre-reinforced plastic having fibres which extend substantially in and across the longitudinal extent of the supporting spring.

3. A suspension according to Claim 2, characterised in that the thickness (h) of the supporting spring (10) is smaller, in particular two-thirds to one-third smaller, than the thickness (h') of the spring plate (1) in the region (c) of contact of the two with each other outside the clamping device.

4. A suspension according to Claims 1, 2 or 3, characterised in that the supporting spring (10) projects from the clamping device (2) by one half to two times the thickness (h') of the spring plate (1) in the region (c) of contact of the two with each other outside the clamping device.

5. A suspension according to one of Claims 1 to 4, characterised in that elastically deformable supports and/or inserts (14, 15), made e.g. of elastomeric material such as rubber, are provided in the clamping device (2) as supporting springs on both sides outside the region of rigid holding.

6. A suspension according to one of Claims 1 to 5, characterised in that the region of rigid holding (d) in the clamping device (2) is two to six times the thickness (h') of the spring plate in the region of contact of the spring plate and the supporting spring with each other outside the clamping device.

## Revendications

1. Suspension pour véhicules, en particulier pour véhicules automoteurs, qui comporte au moins une lame de ressort (1) fixée, par une fixation à serrage (2), à un essieu et, éventuellement à l'une au moins des extrémités, par l'intermédiaire d'un oeillet ou un autre moyen du même genre, au véhicule, la fixation à serrage (2) étant appliquée indirectement ou directement, par au moins une importante partie de la face supérieure et de la face inférieure qui sont tournées vers le ressort, et comportant une suspension d'appui (10, 14, 15), la lame de ressort (1) étant faite d'une matière synthétique renforcée de fibres suivant le sens longitudinal, présentant des éléments d'adaptation de formes, afin qu'un mouvement relatif dans le sens longitudinal du ressort soit empêché, et étant maintenue rigidement dans la fixation à serrage (2), et les ressorts d'appui (10, 14, 15) s'appliquant à plat au ressort par l'intermédiaire d'une couche de glissement, la suspension pour véhicules étant caractérisée en ce que la lame de ressort (1) présente, à l'intérieur de la fixation à serrage (2), deux faces en coin (4, 5) dirigées l'une vers l'autre, qui forment un angle (α) compris entre 5° et 30°, en particulier entre 10° et 20°, avec les faces (6, 7) dirigées vers les extrémités du ressort qui sont voisines d'elles et les rejoignent et qui coopèrent avec des faces en coin (8, 9) de la fixation à serrage (2), un élément (12), avantageusement préparé in situ, fait de matière synthétique chargée, à volume constant, par exemple de résine époxyde chargée de poudre de métal, étant prévu entre la face de contact (11) de la fixation à serrage (2) qui est opposée aux faces en coin, et la lame de ressort (1).

2. Suspension suivant la revendication 1, caractérisée en ce que la suspension d'appui (10), comportant un ressort-lame qui est maintenu au moins partiellement rigide dans la fixation à serrage (2) avec adaptation de formes afin qu'un mouvement relatif dans le sens longitudinal du ressort soit empêché, est formée de matière synthétique renforcée de fibres comportant des fibres qui se trouvent dans le sens longitudinal du ressort d'appui.

3. Suspension suivant la revendication 2, caractérisée en ce que l'épaisseur (h) du ressort d'appui (10) est inférieure à l'épaisseur (h') de la lame de ressort (1) dans la zone de contact (c) du ressort d'appui et de la lame de ressort à l'extérieur de la fixation à serrage et en ce que l'épaisseur (h) du ressort d'appui (10) est en particulier inférieure de deux tiers à un tiers de l'épaisseur (h') de la lame de ressort (1) dans cette zone de contact (c).

4. Suspension suivant l'une quelconque des revendications 1, 2 et 3, caractérisée en ce que le ressort d'appui (10) s'avance à l'extérieur de la fixation à serrage (2) dans une mesure qui correspond à une valeur de la moitié jusqu'au double de l'épaisseur (h') de la lame de ressort (1) dans la zone de contact (c) du ressort d'appui et de la lame de ressort à l'extérieur de la fixation à serrage.

5. Suspension suivant l'une quelconque des revendications 1 à 4, caractérisée en ce que pour former le ressort d'appui, il est prévu dans la fixation à serrage (2), bilatéralement, à l'extérieur de la zone de maintien rigide, des applications et/ou des insertions déformables élastiquement (14, 15), par exemple en matière élastomère telle que du caoutchouc.

6. Suspension suivant l'une quelconque des revendications 1 à 5, caractérisée en ce que la zone de maintien rigide (d) dans la fixation à serrage (2) est d'une valeur qui est de deux à six fois l'épaisseur (h') de la lame de ressort dans le zone de contact de la lame de ressort et du ressort d'appui à l'extérieur de la fixetion à serrage.

Fig. 1

Fig. 2